# EUROPÄISCHE PATENTSCHRIFT

(11) **EP 2 011 972 B1**
(45) Veröffentlichungstag und Bekanntmachung des Hinweises auf die Patenterteilung: **31.07.2013**
(21) Anmeldenummer: 08011891.2
(22) Anmeldetag: 02.07.2008
(51) Int. Cl.: F23G 5/46, F23M 5/08, F22B 1/18

(54) **Anlage, Verfahren und Vorrichtung zur Erzeugung eines überhitzten Mediums**
Method and device for generating an overheated medium
Installation, procédé et dispositif de production d'un milieu surchauffé

(30) Priorität: 03.07.2007 CH 10642007
(43) Veröffentlichungstag der Anmeldung: 07.01.2009
(73) Patentinhaber: clm technologie ag, 8050 Zürich (CH); Andreoli Bruno, APS Beratung, 8713 Uerikon (CH)
(72) Erfinder: Seglias, Werner, 8713 Uerikon (CH); Andreoli, Bruno, 8713 Uerikon (CH)
(74) Vertreter: Rüedi, Regula Béatrice

(56) Entgegenhaltungen:
- WO-A-94/07006
- WO-A1-86/03824
- DE-A1- 10 257 305
- FR-A- 2 836 715
- GB-A- 682 141
- US-A- 1 914 140
- US-A- 4 624 191
- US-B1- 6 381 962

## Beschreibung

### Gebiet der Erfindung

Die Erfindung betrifft ein Verfahren und eine Vorrichtung bzw. ein System zur Erzeugung eines überhitzten Mediums, insbesondere von Dampf bzw. einem Dampf-Gasgemisch, sowie zur Verringerung von Korrosionen in Verbrennungsräumen, die als Heizkessel ausgebildet sind, und Überhitzern in thermischen Abfallverbrennungsanlagen sowie thermischen Bio-Masse-Verbrennungsanlagen.

### Stand der Technik

Beim Betrieb von thermischen Abfall- und/oder Bio-Masse-Verbrennungsanlagen stand zunächst die sichere und störungsfreie Entsorgung der Abfälle, der Biomasse bzw. des Sonderabfalls im Vordergrund. Erst allmählich wurden zur Vermeidung von Umweltschädigungen Versuche unternommen, die Schadstoffemissionen zu begrenzen. Die weltweit knapper werdenden Energievorräte führten schliesslich zu Überlegungen, die im Verbrennungsgut enthaltene Energie, den Heizwert, besser nutzbar zu machen sowie die Prozesse, insbesondere die Energieauskoppelung mittels Dampfturbine zur Stromproduktion, zu optimieren. Insofern ist es von eminenter Bedeutung, künftig die energetische Nutzung des Heizwertes wesentlich zu verbessern.

Die vorliegende Erfindung betrifft insbesondere die Verbrennung bzw. Verwertung von Abfall, Biomasse und Sondermüll, in der Folge gesamthaft als Sonderbrennstoffe bezeichnet. Unter Sonderbrennstoffen sollen also alle Brennstoffe verstanden werden, bei denen im Rauchgas für den Feuerraum, den Heizkessel und die nachgeschalteten Anlageteile korrosive und/oder zur Verschlackung neigende Rauchgasbestanteile vorhanden sind bzw. vorhanden sein können. Solche korrosiven und/oder zur Verschlackung neigenden Stoffe sind Chlor- und Schwefelverbindungen und/oder im Schmelzpunkt reduzierte Aschen, die z.B. einen hohen Alkalianteil aufweisen können.

Wirtschaftliche Lösungen, die die Verstromung von Sonderbrennstoffen auf hohem energetischem Niveau über die Erzeugung von hoch überhitztem Hochdruckdampf in Dampfkesseln von Verbrennungsanlagen für Sonderbrennstoffe ermöglichen bzw. zum Ziel haben, wurden bisher nicht gefunden. Die meisten Sonderbrennstoffanlagen wurden bisher mit Dampfkesseln zur Erzeugung von Mitteldruckdampf (ca. 40 bis maximal 60 bar, insbesondere ca. 40 bis 45 bar) ausgestattet. Die Notwendigkeit zur Beschränkung des Druckes resultiert aus der bei den eingesetzten Werkstoffen verstärkt auftretenden Hochtemperaturkorrosion bei Dampfanlagen, die bei Temperaturen oberhalb 380°C bis 400°C betrieben werden. Die Hochtemperaturkorrosion kann dazu führen, dass Dampfüberhitzer schon nach kurzen Betriebszeiten (innerhalb von 12 Betriebsmonaten) erneuert werden müssen.

Um erhöhten elektrischen Wirkungsgrad zu erreichen, ist es z.B. aus WO 2007/014538 bekannt, Mitteldruckdampf in einem zweiten Überhitzer unter Verwendung nicht korrosiver Brennstoffe weiter zu überhitzen. Dieses Vorgehen hat den Nachteil, dass "saubere" Brennstoffe zugeführt werden müssen. Solche "sauberen" Brennstoffe können gemäss EP 0 823 590 z.B. durch Abtrennung chlorhaltiger Stoffe aus Sonderbrennstoffen erhalten werden.

Aus US 6,381,962 ist ein Verfahren bekannt, in dem das Wärmeträgermedium ausserhalb des Ofens, in einem Wärmetauscher erhitzt und dann einem Überhitzer als Heizmedium zugeführt wird, und GB 682,141 offenbart ein Verfahren, bei dem der Dampf im Ofen selbst durch die Verbrennungsgase direkt überhitzt und diese bereits für die Überhitzung verwendeten Verbrennungsgase zur Vorwärmung des Wassers benützt werden. US 1,914,140 beschreibt ein Verfahren, in dem der Dampf direkt in der Brennkammer überhitzt wird und in dem ein Wärmeträgermedium, das in einer Wärmeträgerleitung geführt wird, an der Verdampfung des im Wasserabscheider abgeschiedenen Wassers beteiligt ist.

Aus WO 94/07006, Figur 1, ist ein Verfahren bekannt, in dem die Erhitzung des Wärmeträgermediums in einem separaten Erhitzer erfolgt, der durch aus dem Ofen abgeleitete Verbrennungsgase gespiesen wird.

FR 2 836 715 offenbart in Figur 5 eine Anlage, in der der Überhitzer ausserhalb des Ofens angeordnet ist und von einem im Kreislauf geführten Wärmeträgermedium geheizt wird. Dabei wird das Wärmeträgermedium direkt in innerhalb des Brennraums angeordneten Rohren erhitzt.

Es stellt sich daher die Aufgabe, eine Anlage und ein Verfahren bereitzustellen, mit welchen der Heizwert der Sonderbrennstoffe auf höherem exergetischen Niveau (hohem Druck- und Temperaturniveau) und ohne vorherige Auftrennung der Sonderbrennstoffe genutzt werden kann, was die Erhöhung des elektrischen Wirkungsgrades ermöglicht, ohne dass der Heizkessel der Verbrennungsanlage, oder ein einem Feuerraum nachgeschalteter Dampfkessel durch Korrosionen gefährdet werden, oder dass zumindest eine Minderung dieser Gefahren erreicht werden kann.

Insbesondere stellt sich die Aufgabe eine effiziente und betriebswirtschaftlich vertretbare Überhitzung von Sattdampf auf mehr als 400°C, vorzugsweise auf mindestens 500°C, und bei einem Dampfdruck von mindestens 150 bar, aus Sonderbrennstoffanlagen bei gleichzeitiger Verringerung der Korrosion im Kessel zu ermöglichen.

Diese Aufgabe wird durch die Anlage nach Anspruch 1 sowie den Ofen nach Anspruch 7 und das Verfahren nach Anspruch 13 gelöst.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung, welche auf die Figuren Bezug nimmt. Dabei zeigen:
Figur 1 das Schaltbild einer Ausführungsform einer erfindungsgemässen Anlage resp. eines erfindungsgemässen Verfahrens
Figur 2 eine dreidimensionale Darstellung einer Ausführungsform eines für die Verbrennung von Sonderbrennstoffen bei gleichzeitiger Erhitzung eines Wärmeträgermediums geeigneten erfindungsgemässen Ofen
Figur 3 eine dreidimensionale Darstellung eines in Längsrichtung geschnittenen Ofens gemäss Figur 2
Figur 4 eine dreidimensionale Darstellung eines in Querrichtung geschnittenen Ofens gemäss Figur 2
Figur 5 eine dreidimensionale Darstellung eines Wandelements mit kanalförmigen Hohlräumen
Figur 6 einen vergrösserten Ausschnitt gemäss

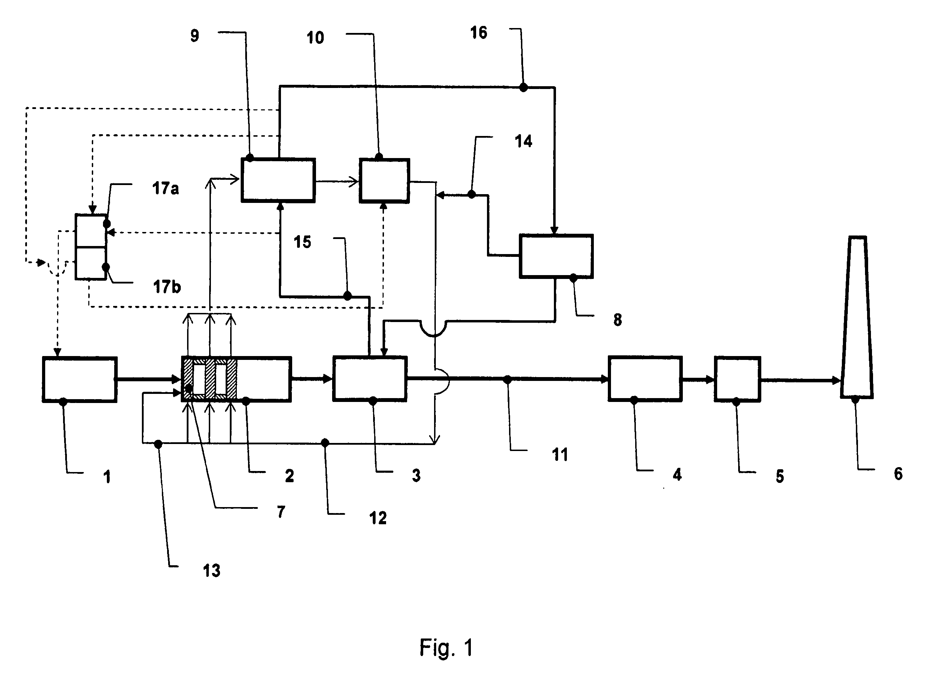

Figur 1 mit einem weiteren Kreislauf zur zusätzlichen Vorwärmung des Mediums, insbesondere des Sattdampfes, des Nassdampfes oder des schwach überhitzten Dampfes innerhalb der Wände des Ofens

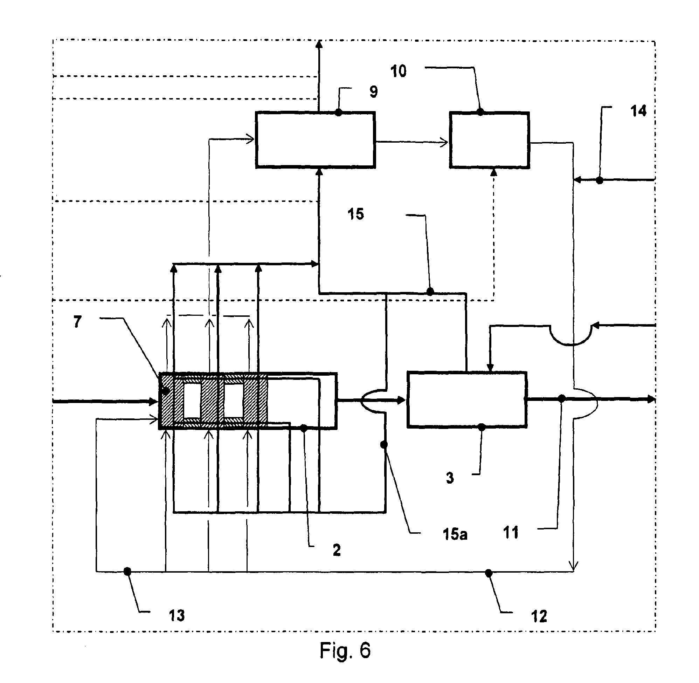

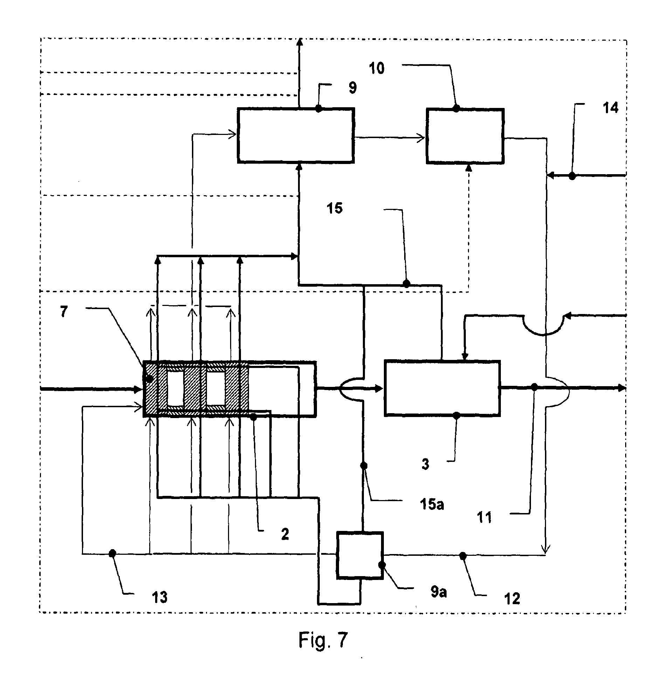

Figur 7 eine Darstellung analog Figur 6 mit einem zusätzlichen Wärmetauscher, in dem mittels der Restenergie des aus dem Überhitzer austretenden Wärmeträgermediums das Medium vor dem Eintritt in die Ofenwände zusätzlich vorgewärmt wird

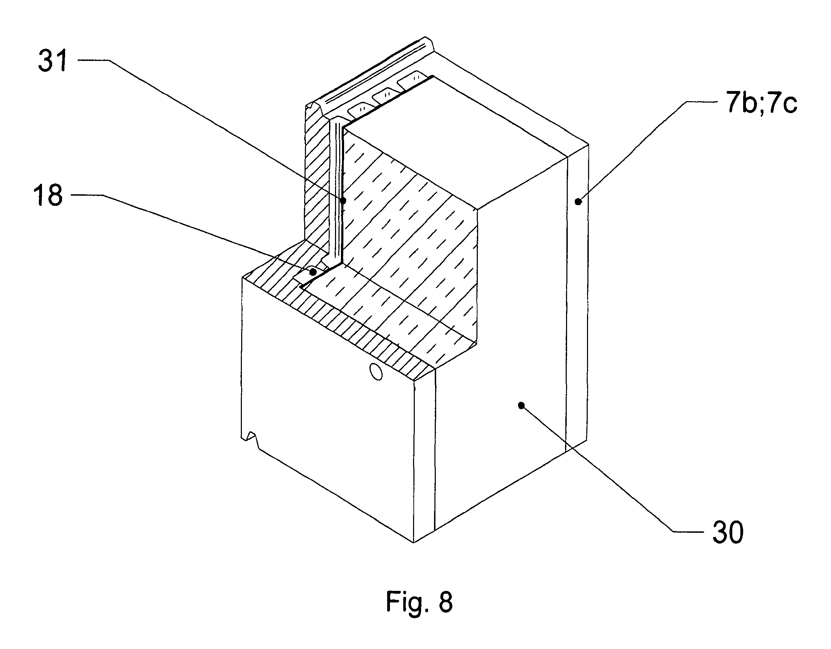

Figur 8 ein einzelnes Wandelement mit vertikal angeordneten kanalförmigen Hohlräumen für die Durchleitung von Wärmeträgermedium, das zur Optimierung der Wärmeübertragung mit einem Reflexionsblech versehen ist

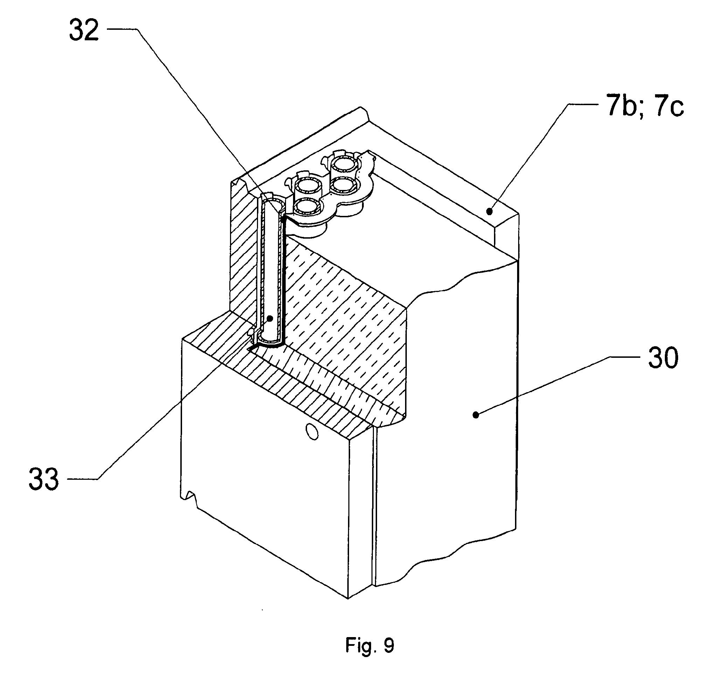

Figur 9 ein einzelnes Wandelement mit vertikal angeordneten kanalförmigen Hohlräumen einschliesslich den in den Hohlräumen geführten Dampfrohre, wobei diese Wandelemente zur Optimierung der Wärmeübertragung durch Strahlung an die Dampfrohre mit einem Strahlungsblech ausgerüstet sind

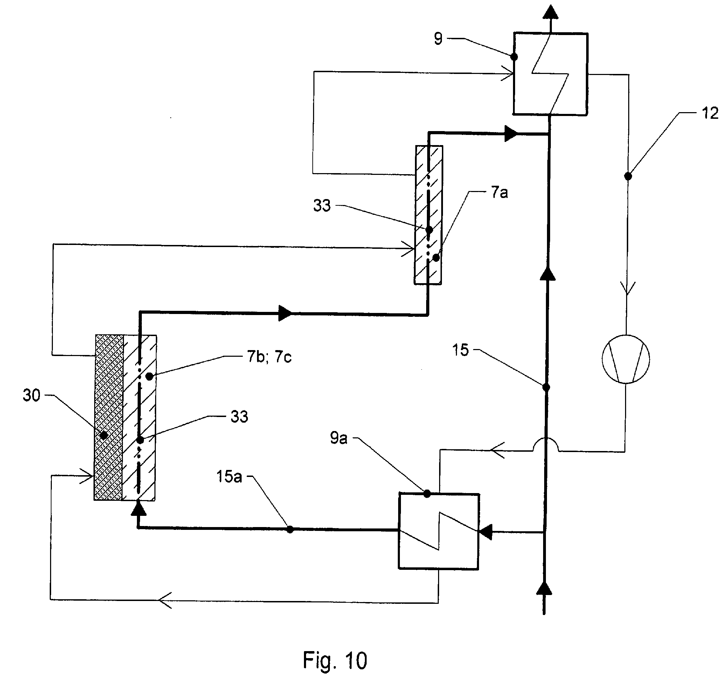

Figur 10 eine detailliertere Darstellung der Medium- und Wärmemediumführung gemäss Figur 7

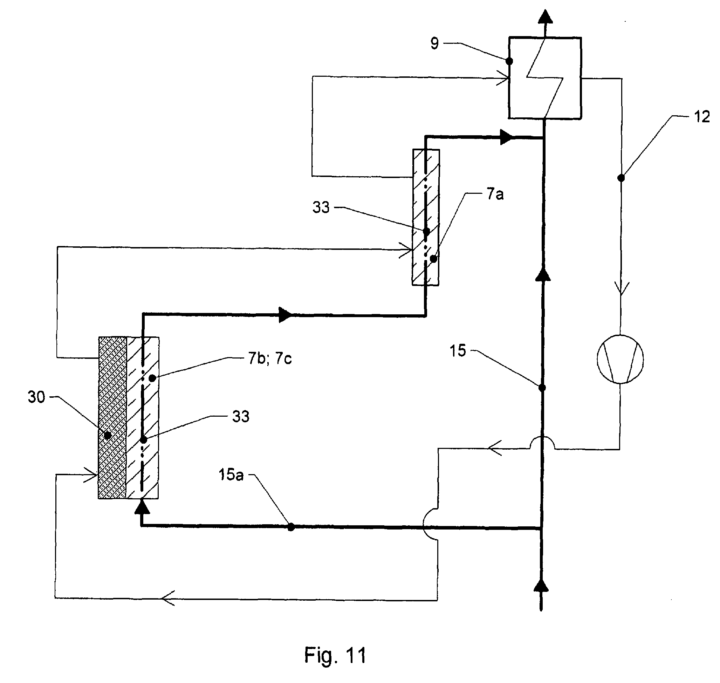

Figur 11 eine detailliertere Darstellung der Medium- und Wärmeträgermediumführung gemäss Figur 6

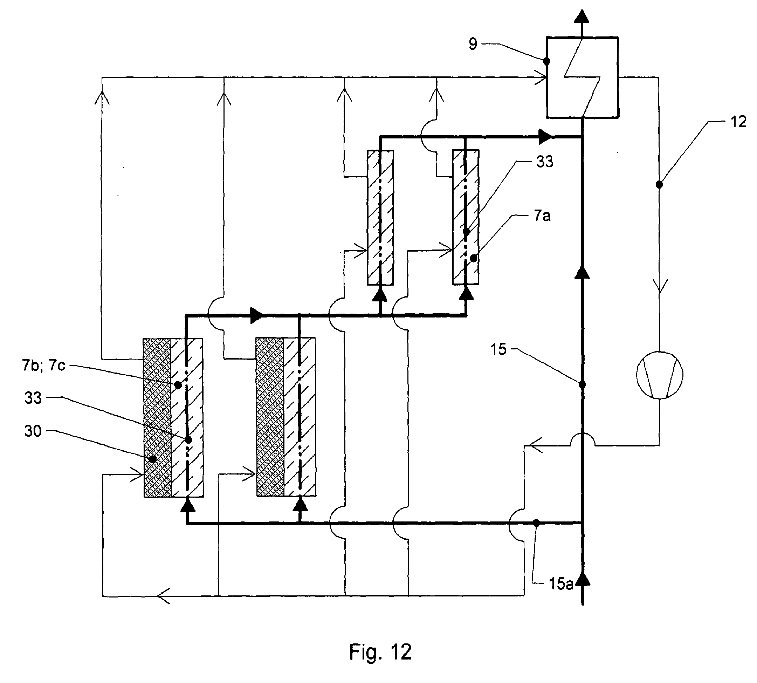

Figur 12 eine Variante, in der Aussen- und Zwischenwände zur Verminderung des Druckverlustes auf der Medium- und Wärmeträgermediumseite parallel angeströmt werden und somit weniger Energie für Gebläse und Speisewasserpumpen aufgewendet werden muss

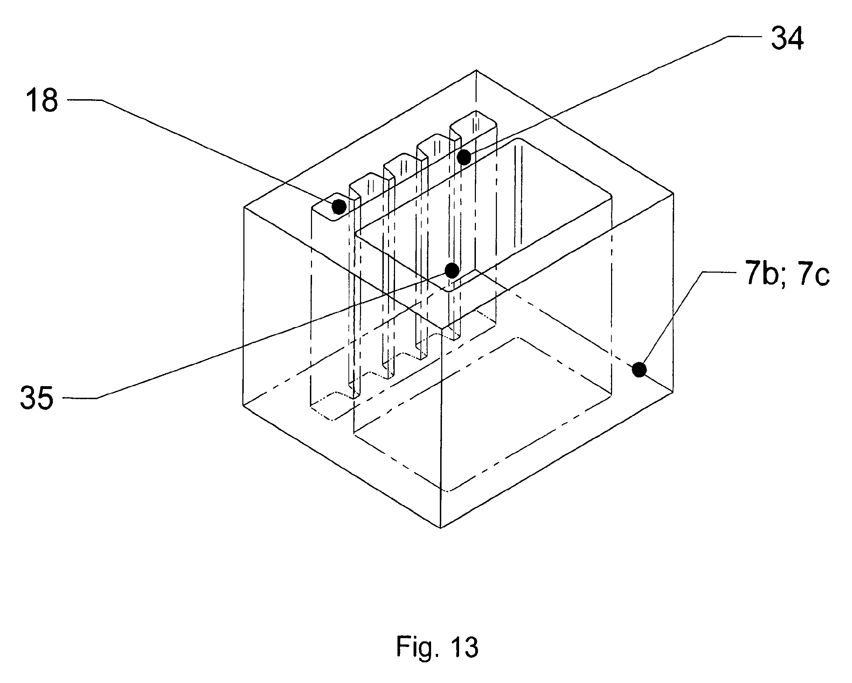

Figur 13 eine Variante eines Wandelements mit kanalförmigen Hohlräumen und mit integriertem Zuführkanal für Wärmeträgermedium.

### Bezugszeichenliste

- 1: Zuführeinrichtung
- 2: Ofen/Feuerraum/Brennraum
- 3: Dampfkessel/Dampferzeuger/Wärmetauscher
- 4: Rauchgasreinigungseinrichtung
- 5: Saugzug
- 6: Kamin
- 7: Feuerraum-Seiten- und -Zwischenwände
7a Feuerraum-Zwischenwände
7b Feuerraum-Längswände
7c Feuerraum-Schmalseitenwände
- 8: Hochdruck-Dampfturbine
- 9: Überhitzer/Wärmetauscher (ein- oder mehrstufig mit Zwischenüberhitzer und/oder Einspritzung)
- 9a: Bypass 15aWärmetauscher (Vorüberhitzer) im Medium-
- 10: Wärmeträger-Umlaufgebläse
- 11: Abgasleitung
- 12: Wärmeträgermedium-Leitung
- 13: Ausblasleitung für Anfahr-Wärmeträgermedium
- 14: Einspeiseleitung für Betriebs-Wärmeträgermedium
- 15: Leitung Medium (z.B. Nass-Dampf/Satt-Dampf/leicht überhitzter Dampf)
- 15a: Medium-Bypass
- 16: Leitung überhitztes Medium (z.B. überhitzter Dampf)
- 17a: erste Regeleinrichtung
- 17b: zweite Regeleinrichtung
- 18: kanalförmige Hohlräume
- 19: Hauptverbrennungskammer
- 20: Nachverbrennungskammer
- 21: Platten der Keramikwände
- 22: Verbinungsnuten
- 23: Rillen
- 24: Verteilerelement
- 25: Verteilerkanal
- 26: Wärmeträgermedium-Zuleitung
- 27: Wärmeträgermedium-Abführleitung
- 28: Feuerzüge
- 29: Hohlräume für die Aufnahme von Befestigungsmitteln
- 30: Wärmeisolation der Wände bzw. Wandelemente
- 31: Reflexionsblech
- 32: Strahlungsblech
- 33: Dampfrohre für die Leitung schwach bis mässig überhitzen Mediums durch die Ofenwände
- 34: ausmauerungsseitiger keramischer Abschluss der kanalförmigen Hohlräume
- 35: Zuführkanal für Wärmeträgermedium

### Definitionen

Die vorliegende Erfindung betrifft insbesondere die Verbrennung bzw. Verwertung von Müll/Abfall, Biobrennstoffen/Biomasse, Sondermüll/Sonderabfall, Industriemüll/Industrieabfall, in der Folge gesamthaft als Sonderbrennstoffe bezeichnet. Unter Sonderbrennstoffen sollen also alle Brennstoffe verstanden werden, die im beschriebenen Temperaturbereich Kesselkorrosion verbunden mit meist signifikanten Standzeit- und Verfügbarkeitseinbussen verursachen.

Die Begriffe Dampfkessel, Dampferzeuger, Wärmetauscher werden hier weitgehend synonym verwendet. Insbesondere wird der Begriff Wärmetauscher für jede Vorrichtung zur indirekten Wärmeübertragung verwendet. Für den ersten Wärmetauscher, welcher der Dampferzeugung dient, wird in der Folge primär der Begriff Dampferzeuger verwendet. Eine bevorzugte Ausgestaltungen ist ein Dampfkessel. Als zweiter Wärmetauscher werden im allgemeinen übliche Wärmetauscher verwendet, wie einstufig oder mehrstufig ausgebildete Wärmetauscher mit Zwischenüberhitzer und/oder Einspritzung. Der zweite Wärmetauscher, welcher zur Überhitzung des im ersten Wärmetauschers erzeugten Dampfes dient, wird in der Folge primär als Überhitzer bezeichnet. Im Rahmen der Beschreibung und der Ansprüche soll weder der Begriff Dampferzeuger noch der Begriff Überhitzer als auf eine bestimmte Ausführungsform beschränkt ausgelegt werden.

Im Rahmen der nachfolgenden Beschreibung wird unter schwach überhitztem Medium (Medium nach Dampferzeuger), insbesondere schwach überhitztem Dampf, ein Medium mit einer Temperatur bis maximal 400°C verstanden, unter überhitztem Medium (Medium nach Überhitzer), insbesondere überhitztem Dampf, ein Medium mit einer Temperatur von mehr als 400°C, insbesondere mehr als 500°C.

### Beschreibung der Erfindung

Erfindungsgemäss umfasst die Anlage zur Erzeugung von überhitztem Medium, insbesondere Dampf, die geeignet ist für die Verbrennung von Sonderbrennstoffen, eine Zuführeinrichtung 1 zum Zuführen der Brennstoffe, erfindungsgemäss insbesondere Sonderbrennstoffe, zu einem Ofen 2 und einen dem Ofen 2 nachgeschalteten Dampferzeuger 3 zum Übertragen von Wärme von den bei der Verbrennung gebildeten heissen Abgase (Rauchgase) auf ein den Dampferzeuger 3 durchströmendes zu überhitzendes Medium, insbesondere Wasser und/oder Dampf, wobei
- der Dampferzeuger 3 über eine Mediumleitung 15 mit einem Überhitzer 9 verbunden ist, derart, dass das heisse bis schwach überhitzte Medium insbesondere Sattdampf, Nassdampf oder leicht überhitzter Dampf, aus dem Dampferzeuger 3 in den Überhitzer 9 überführt wird, und
- der Überhitzer 9 mit dem Ofen 2 über eine Wärmeträgermedium-Leitung 12 verbunden ist, derart, dass ein mittels Wärmeaustausch im Ofen 2 erzeugtes Wärmeträgermedium durch diese Leitung 12 zum Überhitzer 9 geleitet wird und dort als Wärmequelle zur Überhitzung des Mediums dient.

Ferner ist der Überhitzer 9 mit einer Hochdruck-Dampfturbine 8 über eine Leitung 16 derart verbunden, dass aus dem Überhitzer 9 austretendes überhitztes Medium als Antriebskraft zu der Hochdruck-Dampfturbine 8 geleitet wird (siehe Figur 1) und der Ofen 2 weist eine Brennkammer auf, welche im wesentlichen aus feuerfesten Keramikteilen aufgemauert ist, obei in die aus Feuerfestmaterial gebildeten Wände 7 der Brennkammer kanalförmige Hohlräume 18 zur Durchführung/Durchleitung eines gasförmigen Trägermediums eingelassen sind.

Bei Brennkammern geringer Ausdehnung, kann ein Medium-Bypass 15a vorgesehen werden, derart, dass das heisse bis schwach überhitzte Medium, insbesondere der Sattdampf, Nassdampf oder schwach überhitzte Dampf, aus dem Dampferzeuger 3 ganz oder teilweise durch einen in den Ofen 2 integrierten Wärmetauscher geleitet wird. Ein solcher Wärmetauscher kann mindestens eine mit Röhrensystem versehene Brennkammerwand 7 sein, vorzugsweise mehrere derart gestaltete Brennkammerwände 7. Diesem Wärmetauscher im Ofen 2 selbst vorgelagert sein kann ein weiterer Wärmetauscher 9a, der mit dem aus dem Überhitzer 9 austretenden Wärmeträgermedium geheizt wird.

Das erfindungsgemässe Verfahren zur Erzeugung von überhitztem Medium, insbesondere Dampf, in Anlagen, wie oben beschrieben, zeichnet sich dadurch aus, dass Wärme, die in den bei der Verbrennung gebildeten heissen Abgasen enthalten ist, einerseits auf ein den Dampferzeuger 3 durchströmendes Medium, insbesondere Wasser/Dampf, übertragen wird, andererseits auf ein die Wände 7 des Ofens 2 durchströmendes Wärmeträgermedium. Das aus einer ersten Stufe (Hauptanlage) nach Dampferzeugung mittels der aus dem Ofen 2 stammenden Abgase entnommene Medium, insbesondere Sattdampf, Nassdampf oder leicht überhitzter Dampf, wird in eine zweite Stufe (Nebenanlage) überführt und dort mittels eines Wärmetauschers resp. Überhitzers 9 überhitzt und kann anschliessend einer Hochdruck-Dampfturbine 8 zur Stromerzeugung oder einem Hochdruckdampf-Abnehmer zugeführt werden. Der Überhitzer 9 wird mit einem gasförmigen Wärmeträgermedium, vorzugsweise Luft, Dampf oder Luft-Dampf-Gemischen als Wärmeträgermedium gespiesen, welche in den mit kanalförmigen Hohlräumen 18 ausgerüsteten Brennkammerwänden 7, die den Ofen 2 umschliessenden, ohne Zusatzenergie erhitzt wurden. Für guten Betrieb werden 2 Regeleinheiten vorgesehen. Eine erste Regeleinrichtung 17a dient zur Regelung der Zuführrate der zu verbrennenden Abfälle (Stösselgeschwindigkeit), der Rostgeschwindigkeit und der Primärluftzufuhr in Abhängigkeit der thermischen Last des Dampferzeugers 3. Eine zweite Regeleinrichtung 17b regelt die Menge resp. die Umwälzgeschwindigkeit des Wärmeträgermediums in Abhängigkeit von der Mediumproduktion im Dampferzeuger 3, d.h. in der ersten Stufe und/oder in Abhängigkeit der Dampftemperatur nach dem Überhitzer 9. Ein entsprechendes Schaltbild ist in Figur 1 dargestellt, wobei insbesondere für die Regeleinheit 17a nicht alle Wirk- und Stell-Linien eingezeichnet sind.

Das erfindungsgemässe Verfahren wird nun am Beispiel Wasserdampf als Medium und Luft als Wärmeträgermedium näher beschrieben. Neben dem bevorzugten Wasserdampf als zu überhitzendem Medium (Medium) können aber auch andere überhitzbare bzw. gasförmige Medien, wie CO₂, Helium u.s.w. eingesetzt werden. Anstelle von Luft als Wärmeträgermedium eignen sich zur Verbesserung der Wärmeleitfähigkeit Dampf oder ein Dampf-Luft-Gemisch.

Der in einer ersten Stufe, im Dampferzeuger 3, erzeugte Nass-, Satt- oder vorüberhitzte Dampf, üblicherweise ab Drücken von über 40 bar wird einer zweiten Stufe, dem mit erhitzter Luft als Warmeträgermedium beaufschlagten Wärmetauscher resp. Überhitzer 9, zugeführt und dort überhitzt, wobei die Dampfüberhitzung vorzugsweise in Abhängigkeit von der Dampfproduktion geregelt wird. Durch die Erzeugung eines Dampfes mit hohem Druck, vorwiegend in der ersten Stufe, und der Überhitzung des Dampfes in der vorzugsweise unabhängig von der ersten Stufe regulierbaren zweiten Stufe, ergeben sich eine Reihe von Vorteilen, nämlich die optimale Ausnützung der in einer Verbrennungsstufe gewonnenen Energie und optimales "Auffangen" resp. Ausgleichen von Heizwertschwankungen im Sonderbrennstoff.

Zum Ausgleichen von Heizwertschwankungen im Sonderbrennstoff kann Primärlufteintrag in verschiedenen Rostzonen vorgesehen werden. Erhöhung der Primärluftzufuhr kann durch Reduktion der in die Nachverbrennungskammer eingespiesenen Sekundärluft und/oder der rezyklierten Rauchgase kompensiert werden, so dass die Abluftmenge konstant gehalten werden kann. Als weiteres Mittel zur Einflussnahme auf die Verbrennung kann die Verbrennungsluft, insbesondere die Primärluft vor deren Einspeisung in die Brennkammer vorgewärmt werden.

Ein weiterer Vorteil des erfindungsgemässen Ofens ist dessen durch die Keramikwände bedingte Trägheit, welche kurzzeitige Heizwertschwankungen weitgehend nivelliert.

Die Hauptanlage (erste Stufe) und die Nebenanlage (zweite Stufe) sind über einen Wasser-Dampf-Kreislauf miteinander verbunden. Diese wärmetechnische Kopplung zwischen der Hauptanlage als Dampferzeugerresp. Verdampfer-Anlage und der Nebenanlage als externer, ohne zusätzlichen Brennstoffeinsatz arbeitender Überhitzer-Anlage, hat gegenüber den bisher bekannten Verfahren den Vorteil, dass die Nebenanlage als Überhitzer ohne Verdampferteil und ohne Zusatzfeuerung betrieben werden kann und die Investitionskosten im Vergleich zu einem in die Hauptanlage integrierten Überhitzer oder einem extern betriebenen Überhitzer mit Fremd-Zusatzbefeuerung gering sind und keine zusätzlichen Brennstoffkosten für den Betrieb des externen Überhitzers anfallen.

Die Regeleinrichtung 17b dient der Erzeugung konstanter Mediums-Parameter (Temperatur, Druck) und stellt gleichzeitig sicher, dass die Wandtemperaturen im Ofen 2 unter den Asche-/Staub-Erweichungspunkt gesenkt werden.

Dank der erfindungsgemässen Auslegung und Steuerung der Anlage braucht es üblicherweise bei Anlagen, die den für thermische Abfallbehandlungsanlagen gültigen gesetzlichen Vorschriften (z.B. EU-Vorschriften) unterliegen, weder zusätzliche Brenner noch Stützbrenner als Zusatzfeuerung. In nach EU-Vorschriften gebauten und betriebenen Hauptanlagen vorhandene Brenner können beim Anfahr- und Abfahrbetrieb sowie bei Unterschreitung der Abgas-Temperatur von 850°C nach der letzten Luftzuführung in der Nachverbrennkammer gezündet werden.

Jede Änderung der thermischen Leistung wird im Bereich der Verbrennung durch eine Änderung der Sauerstoffkonzentration im Rauchgas und im Bereich des Dampfkessels durch eine Änderung der daraus austretenden Dampfmenge angezeigt. Dabei stellt die Sauerstoffkonzentration eine Messgrösse dar, welche es ermöglicht, auf Leistungsänderungen frühzeitig zu reagieren, d.h. bevor sich die Dampfmenge verändert.

Für die Regelung 17a der Hauptanlage, die Feuer-Leistungs-Regelung, kann jede beliebige, z.B. vom Lieferanten des Systems mitgelieferte Feuer-Leistungs-Regelung verwendet werden.

In einer geeigneten Feuer-Leistungs-Regelung wird beispielsweise mindestens eine der folgenden Eingangsgrössen bestimmt:
- die Dampfmenge
- die Sauerstoffkonzentration am Ofenaustritt resp. im Rauchgas.

Um die Einhaltung der gewünschten Eingangsgrössen zu ermöglichen sind vorzugsweise 3 Regelkreise vorgesehen, welche die folgende Funktionen erfüllen:
- Regulierung der Brennmaterialzufuhr, üblicherweise realisiert durch Regelung der Stösselgeschwindigkeit,
- Regulierung der Rostgeschwindigkeit, d.h. der Verweilzeit des Brennmaterials auf dem Rost,
- Regulierung der Primärluftmenge Vorzugsweise kontrolliert eine erste Regelungsstufe die Dampfmenge, eine zweite Regelungsstufe die Sauerstoffkonzentration im Rauchgas.

Bei Unterschreitung des Dampfmengensollwert wird die Primärluftmenge (die Zufuhr von Frischluft zur Hauptbrennkammer) erhöht, üblicherweise unter Reduktion der in die Nachverbrennung eingespiesenen Sekundärluftmenge. Damit wird die Feuerleistung erhöht und die Gesamtluftmenge kann - falls gewünscht - konstant gehalten werden. Der Verbrennungsablauf derjenigen Mülleigenschaften, die nicht automatisch gemessen werden, wird üblicherweise durch Handeingriffe angepasst.

Die Variablen, welche eine Änderung der Verbrennungsqualität sowie der Rostbelastung erkennen lassen sind:
- die Rosttemperatur
- die Temperatur der Ausbranddecke und die Temperatur im Feuerraum kessel- und einfülltrichterseitig.

Eine Veränderung der Rostbelastung wird meistens durch eine Änderung der Homogenität oder der Zusammensetzung des Sonderbrennstoffs, insbesondere des Mülls, hervorgerufen.

Die Dicke des Brennstoff(Müll)betts über den einzelnen Rostzonen ist hauptverantwortlich für die Grösse der Rostbelastung. Sie kann über die Rosttemperatur, welche eine Funktion derselben ist, erkannt werden. Einflussnahme auf die Rostbelastung erfolgt einerseits über die Rostgeschwindigkeit, andererseits über den Ort und die Menge der Primärluftzuführung.

Da die Feuerleistung in der Hauptanlage und damit die in der Hauptanlage erzeugte Dampfmenge durch die dort vorgesehene Regelung möglichst konstant gehalten wird, kann der in den Ofen integrierte Wärmetauscher mit grosser Konstanz der Geschwindigkeit und der Menge des Wärmeträgermediums betrieben werden. Bei Änderung der Menge an stark überhitztem Dampf, d.h. bei Herabsetzung der Turbinenleistung, wird die Umwälzgeschwindigkeit des im Kreislauf geführten Wärmeträgermediums entsprechend angepasst.

Hauptanlagen im Sinne der vorliegenden Erfindung sind mit Sonderbrennstoffen, wie Abfall und Restabfall befeuerte Abfallverbrennungsanlagen und Biomasseverbrennungsanlagen mit Biomassen (ebenfalls als Sonderbrennstoffe bezeichnet), die im Rauchgas korrosive oder den Ascheschmelzpunkt erniedrigende Bestanteile enthalten und die deshalb keine hohe Überhitzung des Mediums durch die Abgase selbst zulassen.

Die Nebenanlage, der Überhitzer, ist vorzugsweise als separater Wärmetauscher ausgebildet, wobei der Dampf aus der Hauptanlage durch die im Überhitzer eingebauten Rohre strömt. Diese werden von dem in einem geschlossenen Kreislauf geführten Wärmeträgermedium, das beim Durchströmen der mit kanalförmigen Hohlräumen (z.B. Bohrungen) 18 ausgebildeten Brennkammerwänden 7 des Ofens 2 erhitzt wird, angeströmt.

Der Trägermedium-Kreislauf wird mittels eines Gebläses 10, welches dem Überhitzer nachgeschaltet ist und von dem auf ca 400°C abgekühlten Trägermedium angeströmt wird, sichergestellt, wobei die Durchflussregelung durch einen Frequenzumformer und/oder ein dem Gebläse nachgeschaltetes Regelorgan (üblicherweise eine Regel-Klappe) erfolgt.

Je nach Dimensionierung des Ofens 2 kann es schwierig sein, diesen mit ausreichend Wärmetauscherfläche auszustatten, um die für die Überhitzung benötigte Energiemenge auf das Wärmeträgermedium zu übertragen. In solchen Fällen kann es sinnvoll sein, das Medium, insbesondere den Sattdampf, Nassdampf oder schwach überhitzten Dampf, nach Austritt aus dem Dampferzeuger 3 mindestens teilweise und vorzugsweise teilweise nicht direkt über Leitung 15 in den Überhitzer 9 einzuspeisen, sondern vorab über einen Medium-Bypass 15a durch den Ofen 2 zu leiten, wo eine teilweise Überhitzung stattfindet (siehe Fig. 6 und 7). Diese Zuleitung zum Ofen 2 kann direkt (Fig. 6) oder über einen zusätzlichen Wärmetauscher bzw. Vorüberhitzer 9a (siehe Fig. 7) erfolgen. Dieser Vorüberhitzer 9a wird in die Leitung 12 integriert, mittels derer Wärmemedium nach dem Verlassen des Überhitzers 9 und nach dem Wärmeträger-Umlaufgebläse 10 zum Ofen 2 zurückgeleitet wird. Dadurch kann die Restwärme des Wärmeträgermediums zur zusätzlichen Vorwärmung des Mediums genutzt werden.

Die Durchleitung durch den Ofen 2 bzw. die Nutzung des Ofens 2 als zusätzlicher Wärmetauscher, kann durch Seiten- oder Zwischenwände 7 erfolgen, die mit grösseren Bohrungen oder -vorzugsweise - grösseren auf der dem Feuerraum abgewandten Seite mittels Strahlungsblech 32 abgegrenzten Hohlräumen versehen sind, welche zur Aufnahme von Dampfrohren 33, durch die mindestens ein Teil des unter Druck stehenden Mediums aus dem Dampferzeuger 3 geleitet wird, geeignet sind (siehe Fig. 9). Diese Dampfrohre 33 werden zur besseren Wärmeübertragung vorzugsweise von Wärmeträgermedium umspült. In diesen Dampfrohren wird das Medium mittels Strahlungswärme vorüberhitzt, teilüberhitzt oder - je nach Temperatur im Feuerraum 2 - überhitzt.

Zur besseren Wärmenutzung können die Aussenwände oder Aussenwandelemente 7b, 7c des Ofens 2 ausmauerungsseitig, d.h. auf der Seite der Bohrungen 18, welche der Brennkammer angewandt ist, mit einem Reflexionsblech 31 (siehe Fig. 8) bzw. auf der Seite der Dampfrohre 33, welche der Brennkammer abgewandt ist, mit einem Strahlungsblech 32 (siehe Fig. 9) versehen sein. Die Aussenwänden 7b, 7c sind zudem - ob bei Ausführung mit oder ohne Reflexionsblech 31 bzw. Strahlungsblech 32 -auf ihrer der Brennkammer abgewandten Seite, d.h. aussen, mit einer Wärmeisolation 30, beispielsweise einer keramischen Masse, einer Isoliermatte, Feuerfestmaterial etc. versehen (Fig. 8-12).

In der Startphase des erfindungsgemässen Verfahrens wird ein bei Raumtemperatur gasförmiges Wärmeübertragungsmedium, vorzugsweise Luft, verwendet, welches auf mindestens 600°C erhitzt wird. Dieses Wärmeträgermedium wird verwendet, um im Überhitzer 9 den aus dem Dampferzeuger 3 stammenden Nass-, Satt- oder vorüberhitzten Dampf auf über 400°C, vorzugsweise über 520°C, zu überhitzen. Das gasförmige Wärmeträgermedium wird dann kontinuierlich über eine Einspeise-Leitung 14 durch Dampf ersetzt oder mit Dampf oder einem anderen Wärmeträgermedium vermischt, wobei das bei Raumtemperatur gasförmige Trägermedium aus dem Wärmeträgermedium-Kreislauf über eine Ausblasleitung 13 ausgeschleust wird.

In der Endphase wird der als Wärmeträgermedium verwendeter Wasserdampf kontinuierlich über eine Einspeise-Leitung 14 durch ein bei Raumtemperatur gasförmiges Wärmeträgermedium ersetzt, wobei der Dampf aus dem Wärmeträgermedium-Kreislauf über eine Ausblasleitung 13 ausgeschleust wird.

Wie bereits vorstehend erwähnt, werden zur Durchführung des Verfahrens zwei spezielle Vorrichtungen verwendet. Die erste spezielle Vorrichtung ist der Überhitzer 9, dem das in einer Hauptanlage (erste Stufe) erzeugte Medium, insbesondere Satt-, Nass- oder leicht überhitzter (vorüberhitzter) Dampf, insbesondere Frischdampf, zugeführt wird, wobei dieser Überhitzer 9 vorzugsweise mit einer Turbine 8 zur Stromerzeugung verbunden ist. Die zweite spezielle Vorrichtung ist ein speziell gestalteter, gemauerter Ofen 2, umfassend die vom Wärmeträgermedium durchströmten, mit kanalförmigen Hohlräumen (Bohrungen) 18 versehenen Brennkammerseitenwände 7b, 7c und Brennkammerzwischenwänden 7a. Solche Brennkammerzwischenwände können nicht nur - wie dargestellt - in Querrichtung angeordnet sein, sondern auch in Längsrichtung. Bei der Durchleitung des Wärmeträgermediums durch diese Brennkammerwände 7 wird das Wärmeträgermedium, bei gleichzeitiger Abkühlung der den Feuerraum durchströmenden Rauchgase und der Wandoberfläche der BrennkammerWände, erhitzt. Dieses erhitzte Wärmeträgermedium wird anschliessend dem Überhitzer 9 zugeführt.

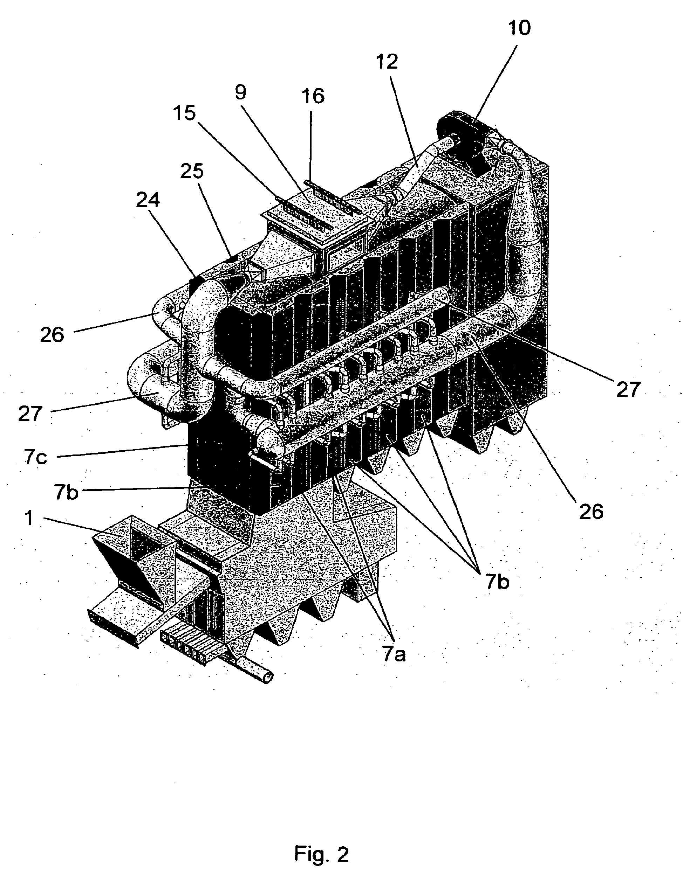

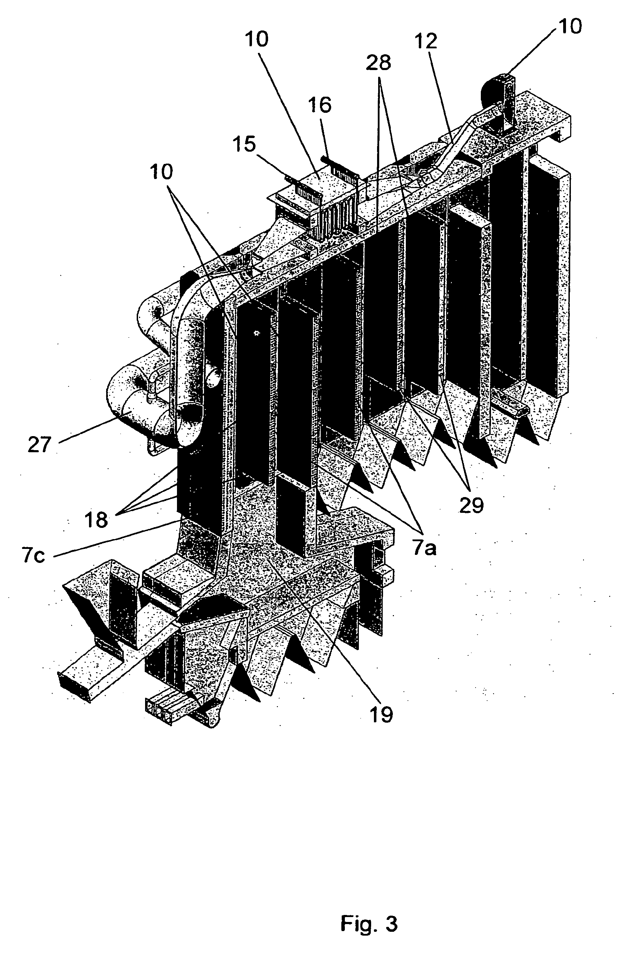

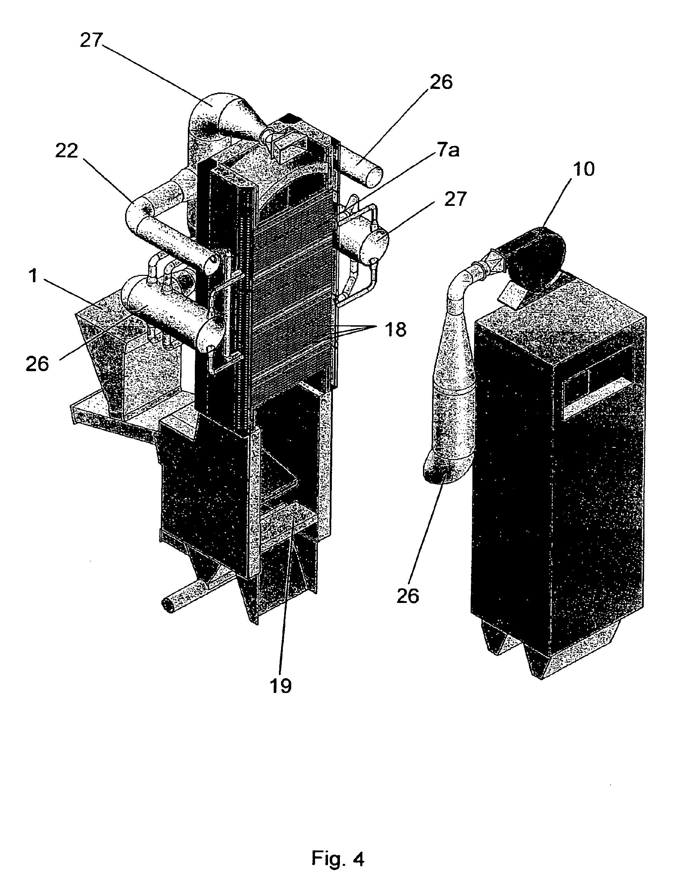

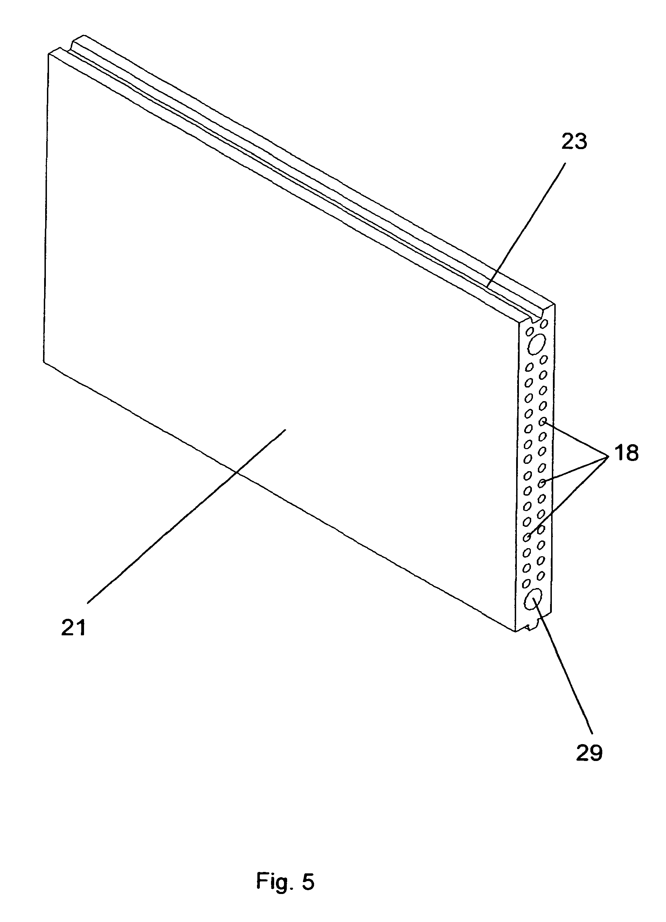

Der erfindungsgemässe Ofen 2 (wie z.B. dargestellt in Figuren 2 bis 5) zeichnet sich dadurch aus, dass die Brennkammer im wesentlichen aus feuerfesten Keramikteilen, vorzugsweise schlackenabweisendem keramischem Material, wie SiC, aufgemauert ist, und dass in die aus Feuerfestmaterial bestehenden Aussen- resp. Seiten-und die Zwischenwände 7a, 7b, 7c der Brennkammer kanalförmige Hohlräume (Bohrungen, Kanäle) 18 zur Durchführung/Durchleitung eines gasförmigen Trägermediums, insbesondere Luft, Dampf oder Luft-Dampf Gemische, eingelassenen sind. Dadurch werden die folgenden Vorteile erzielt:
- Die Oberflächentemperaturen der Ausmauerung können soweit abgesenkt werden, dass Flugascheanhaftungen vermieden werden und
- in den rauchgasseitigen Strahlungszügen kann auf mit einem Korrosionschutz versehene Kesselwände verzichtet werden, was mit entsprechender Kostenreduktion verbunden ist.

Bevorzugt sind die Wände des Ofens 2 mit Hohlräumen 18 versehenen, die parallel zur Wandoberfläche angeordnet sind. Die Hohlräume 18 können vertikal, horizontal, mäanderförmig etc. verlaufen, wobei horizontaler Verlauf bevorzugt ist.

Falls der Ofen 2 zusätzlich als Wärmetauscher zur zusätzlichen Vorwärmung des aus dem Dampferzeuger 3 austretenden Mediums dienen soll, weist dieser Hohlräume auf, die mit Dampfrohren 33 versehen sind, durch welche das schwach bis mässig überhitze Medium geleitet wird. Diese Hohlräume werden vorzugsweise auf der dem Feuerraum abgewandten Seite durch ein Strahlungsblech 32 gebildet. Die Dampfrohre 33 können so miteinander verbunden sein, dass die Aussenwände 7b, 7c und die Zwischenwände 7a in Serie geschaltet sind oder parallel. In Serie geschaltet bedeutet, dass die gesamte Mediummenge eine Wand nach der anderen durchströmt (siehe Fig. 10 und 11), parallel geschaltet bedeutet, dass die Mediummenge aufgeteilt und diese Teilmengen verschiedenen Wandelementen gleichzeitig zugeführt werden (Fig. 12).

Ebenfalls bevorzugt ist es, wenn der erfindungsgemässe Ofen 2 eine Hauptverbrennungskammer 19 und eine Nachverbrennungskammer 20 aufweist. Zur Optimierung der Wärmenutzung, resp. der in der Brennkammer gewünschten Abkühlung der Rauchgase, werden vorzugsweise Zwischenwände 7a vorgesehen, durch welche die Rauchgase mäanderförmig umgeleitet werden, wodurch deren Verweilzeit im Ofen 2 erhöht, und der Wärmeübergang auf das Wärmeträgermedium verbessert wird.

Die kanalförmigen Hohlräume 18 können gegossene Kanäle oder Bohrungen sein. Vorzugsweise haben sie gleich bleibenden regelmässigen, insbesondere runden, Querschnitt. Die Anzahl der kanalförmigen Hohlräume 18 sowie deren Querschnitt sind so ausgebildet, dass eine optimale Wärmeübertragung sichergestellt werden kann.

Die Seitenwände 7b, 7c des Ofens sind vorzugsweise aus möglichst wenigen, wenn immer möglich im Herstellwerk vorgefertigten Keramikteilen (Keramikplatten 21) aufgebaut. Bevorzugt wären einstückig ausgebildete Wände, damit der Ofen möglichst wenig abzudichtende Fugen aufweist. Keramikwände mit kanalförmigen Hohlräumen sind aber in der erforderlichen Grösse kaum erhältlich. Grosse Wände müssen üblicherweise aus einzelnen mit Hohlräumen versehenen keramischen Elementen (Steinen) vor Ort erstellt, d.h. vermauert werden. Um die Abdichtung zu verbessern, sind die "Bausteine", die Platten 21 der Keramikwände vorzugsweise im Randbereich mit Verbinungsnuten 22 oder anderen Eingriffselementen resp. die "Gegenkante" mit entsprechenden Rillen 23 oder anderen Führungselementen gestaltet.

In nach Einbau im Ofen 2 vertikaler Richtung sind die Kanten der die Seitenwände bildenden Platten zudem in einem nach aussen liegenden Bereich abgeschrägt, bzw. so ausgebildet, dass die Öffnungen der kanalfömigen Hohlräume 18 offen liegen, resp sich in einen durch zwei oder drei Keramikplatten und ein Verteilerelement 24 gebildeten zwei- oder dreiteiligen Verteilerkanal 25 öffnen. Drei Wände resp. Wandabschnitte, nämlich zwei Abschnitte einer Seitenwand 7b und die Zwischenwand 7a sind an einem dreiteiligen Verteilerkanal 25 beteiligt, wenn gleichzeitig eine Zwischenwand 7a in diesen Kanal mündet. An dieser Stelle sind die Platten der Seitenwände nicht direkt miteinander sondern über die Zwischenwand 7a miteinander verbunden. Zur Verbesserung dieser Verbindung können Mittel analog zu den oben beschriebenen verwendet werden, d.h. z.B. Nuten und Rillen. Das Verteilerelement ist derart gestaltet, dass es zusammen mit den Stirnseiten der Wandabschnitte der Längswand 7b und der Stirnseite der Zwischenwand 7a Teilkanäle bildet, die gegeneinander geschlossen und einzeln mit Wärmeträgermedium beaufschlagbar sind. Der Vorteil einer solchen Gestaltung des Verteilerkanals als drei Teilkanäle liegt im geringeren Druckverlust im Wärmeträgermedium.

Verteilerelemente 24 resp. Verteilerkanäle 25, wie oben beschrieben, sind vorzugsweise an allen vertikalen Verbindungsstellen von Platten, welche die Wände der Längsseiten 7b bilden, und Platten, welche die quer dazu angeordneten Zwischenwände resp. die Wände der Schmalseiten 7c bilden, vorgesehen. Die Zuführung und die Abführung des Wärmeträgermediums erfolgt über Zuleitungen 26 resp. Abführleitungen 27 zu diesen Verteilerkanälen 25.

Bei vertikal angeordneten kanalförmigen Hohlräumen 18 kann es sinnvoll sein, Wandelemente einzusetzen, die ausmauerungsseitig einen vertikalen Zuführkanal 35 für Wärmetragermedium besitzen (siehe Figur 13). Eine entsprechende Ausführungsform ist auch für die herstellung einer Wand 7 mit horizontal angeordneten kanalförmigen Hohlräumen 18 geeignet.

Mitumfasst durch die vorliegende Erfindung ist folglich ein Ofen 2, dessen Wände 7 mindestens teilweise aus Wandelementen aufgemauert sind, wobei die Wandelemente kanalförmige Hohlräume 18 und in die gleiche Richtung verlaufende Zuführkanäle 35 für Wärmeträgermedium aufweisen.

Zur Stabilisierung der Keramikplatten können eine oder mehrere kanalförmige Hohlräume 29 grösseren Durchmessers vorgesehen werden, die zur Aufnahme eines stabilisierenden resp. als Befestigung dienenden gekühlten und vorzugsweise mit einer Wärmedämmung versehenen Rohres dienen. Für die Wärmedämmung wird beispielsweise zwischen der Innenwand des kanalförmigen Hohlraumes 29 und dem gekühlten Rohr eine wärmedämmende Giessmasse eingebracht.

Die Anspeisung/Anströmung des Ofens 2 durch das aus dem Überhitzer 9 rezyklierte Wärmeträgermedium erfolgt, um die Druckverluste gering bzw. tief halten zu können, wenn immer möglich parallel. Eine serielle Anströmung, d.h. mäanderförmige Führung des Wärmeträgermediums in den Wänden ist auch möglich, doch sind mit einer solchen Führung des Wärmeträgermediums und bei der angestrebten hohen Geschwindigkeit von vorzugsweise mehr als 60m/sec hohe Druckverluste verbunden, die unerwünscht sind.

## Patentansprüche

1. Anlage zur Erzeugung von überhitztem Medium insbesondere Dampf mittels eines Wärmeträgermediums mit einer Zuführeinrichtung (1) zum Zuführen von Brennstoffen zu einem Ofen (2) und einem dem Ofen nachgeschalteten Dampferzeuger (3) zum Übertragen von Wärme von den bei der Verbrennung gebildeten heissen Abgase auf ein den Dampferzeuger (3) durchströmendes zu überhitzendes Medium, wobei der Dampferzeuger (3) über eine Mediumleitung (15) mit einem Überhitzer (9) verbunden ist, derart, dass das heisse bis schwach überhitzte Medium aus dem Dampferzeuger (3) in den Überhitzer (9) überführt wird, der Überhitzer (9) mit dem Ofen (2) über eine Wärmeträgermedium-Leitung (12) verbunden ist, derart, dass ein mittels Wärmeaustausch im Ofen (2) erzeugtes gasförmiges Wärmeträgermedium durch diese Leitung (12) zum Überhitzer (9) geleitet wird und dort als Wärmequelle zur Überhitzung des Mediums im Überhitzer (9) dient, und der Überhitzer (9) mit einer Hochdruck-Dampfturbine (8) über eine Leitung (16) derart verbunden ist, dass aus dem Überhitzer (9) austretendes überhitztes Medium als Antriebskraft zur Hochdruck-Dampfturbine (8) geleitet wird, wobei
die Anlage geeignet ist für die Verbrennung von Sonderbrennstoffen als Brennstoffe, **dadurch gekennzeichnet dass**
der Ofen (2) eine Brennkammer aufweist, welche im wesentlichen aus feuerfesten Keramikteilen aufgemauert ist, und dass in die aus Feuerfestmaterial gebildeten Wände (7) der Brennkammer kanalförmige Hohlräume (18) zur Durchführung/Durchleitung des gasförmigen Wärmeträgermediums eingelassenen sind.

2. Anlage gemäss Anspruch 1, **dadurch gekennzeichnet, dass** der Ofen (2) eine Brennkammer aufweist, die als eine Hauptverbrennungskammer (19), eine Nachverbrennungskammer (20) und Feuerzüge (28) ausgestaltet ist, und deren Wände (7) mit kanalförmigen Hohlräumen (18) versehenen sind, die parallel zur Wandoberfläche angeordnet sind und an der einen Stirnseite in einen Wärmeträgermedium-Verteilerkanal (25) für die Wärmeträgermedium-Zuleitung und auf der anderen Stirnseite in einen Wärmeträgermedium-Verteilerkanal (25) für die Wärmeträgermedium-Ableitung münden.

3. Anlage gemäss Anspruch 1 oder 2, **dadurch gekennzeichnet, dass** die Hohlräume (18) als Bohrungen oder Kanäle, vorzugsweise mit gleich bleibendem regelmässigem, insbesondere rundem Querschnitt ausgebildet sind.

4. Anlage gemäss irgendeinem der vorangehenden Ansprüche, **dadurch gekennzeichnet, dass** der Ofen (2) auch mit Brennkammerzwischenwänden ausgestattet ist und dass das Feuerfestmaterial der Brennkammerwände (7b, 7c) und Brennkammerzwischenwände (7a) aus schlackenabweisendem keramischen Material besteht.

5. Anlage gemäss irgendeinem der vorangehenden Ansprüche, **dadurch gekennzeichnet, dass** sie eine erste Regeleinrichtung (17a) und/oder eine zweite Regeleinrichtung (17b) umfasst, welche zweite Regeleinrichtung (17b) die Zuführrate des Wärmeträgermediums in Abhängigkeit der Mediumproduktion des stark überhitzten Mediums regelt.

6. Anlage gemäss irgendeinem der vorangehenden Ansprüche, **dadurch gekennzeichnet, dass** mindestens ein Teil des Mediums nach dem Dampferzeuger (3) über einen Medium-Bypass (15a) durch den Ofen (2) zur zusätzlichen Erhitzung, gegebenenfalls via einen Vorüberhitzer (9a), geleitet und erst anschliessend in den Überhitzer (9) geführt wird, wobei mindestens ein Teil der Wände (7) des Ofens (2) Hohlräume mit darin angeordneten Dampfrohren (33) aufweist, derart, dass die Dampfrohre von Wärmeträgermedium umspülbar sind.

7. Ofen (2), geeignet für die Verwendung in einer Anlage gemäss irgendeinem der vorangehenden Ansprüche, wobei die Brennkammer des Ofens (2) im wesentlichen aus feuerfesten Keramikteilen aufgemauert ist, und in die aus Feuerfestmaterial gebildeten Wände (7) der Brennkammer kanalförmige Hohlräume (18) eingelassenen sind, insbesondere parallel zur Wandoberfläche angeordnete Hohlräume (18), wobei die Wände (7) aus Wandelementen aufgemauert sind, wobei die Wandelemente kanalförmige Hohlräume (18) zur Durchführung/Durchleitung eines gasförmigen Wärmeträgermediums und in die gleiche Richtung verlaufende Zuführkanäle (35) für Wärmeträgermedium aufweisen.

8. Ofen (2) gemäss Anspruch 7, **dadurch gekennzeichnet, dass** in der Brennkammer Zwischenwände 7a vorgesehen sind, welche mit kanalförmigen Hohlräumen (18) zur Durchleitung von Wärmeträgermedium versehen sind, und durch welche die Rauchgase mindestens teilweise mäanderförmig umgeleitet werden, derart, dass deren Verweilzeit im Ofen (2) erhöht, und der Wärmeübergang auf das Wärmeträgermedium verbessert wird.

9. Ofen (2) gemäss Anspruch 7 oder 8, **dadurch gekennzeichnet, dass** die kanalförmigen Hohlräume (18) gegossene Kanäle oder Bohrungen mit gleich bleibendem regelmässigem, insbesondere rundem, Querschnitt sind.

10. Ofen (2) gemäss irgendeinem der Ansprüche 7 bis 9, **dadurch gekennzeichnet, dass** die Keramikteilen als Platten ausgeführt sind und die Seitenwände der Brennkammer bildenden Platten Stirnseiten aufweisen, die in einem nach aussen liegenden Bereich abgeschrägt sind, so dass die Öffnungen der kanalfömigen Hohlräume (18) sich in einen durch zwei oder drei Keramikplatten und ein Verteilerelement (24) gebildeten zwei- oder dreiteiligen Verteilerkanal (25) öffnen, der an mindestens einer Stelle mit einer Wärmeträgermedium-Zuleitung (26) oder einer Wärmeträgermedium-Ableitung (27) verbunden ist.

11. Ofen (2) gemäss irgendeinem der Ansprüche 7 bis 10, **dadurch gekennzeichnet, dass** mindestens ein Teil der Wände (7) Hohlräume mit darin angeordneten Dampfrohren (33) aufweist.

12. Ofen (2) gemäss irgendeinem der Ansprüche 7 bis 11, **dadurch gekennzeichnet, dass** die feuerfesten Keramikteile Teile aus schlackeabweisender Keramik sind.

13. Verfahren zur Erzeugung von überhitztem Medium, insbesondere Dampf, in Anlagen gemäss irgendeinem der Ansprüche 1 bis 6, insbesondere unter Verwendung von Müll/Abfall oder Biomasse als Brennstoff, wobei das aus dem Dampferzeuger (3) einer ersten Stufe (Hauptanlage) entnommene Medium, insbesondere Sattdampf, Nassdampf oder leicht überhitzter Dampf, in den Überhitzer (9) einer zweiten Stufe (Nebenanlage) überführt und dort mittels des Überhitzers (9) überhitzt und anschliessend einer Hochdruckdampfturbine (8) zur Stromerzeugung zugeführt wird, **dadurch gekennzeichnet, dass** der Überhitzer von dem in den Hohlräumen (18) des Ofens (2) erhitzten gasförmigen Wärmeträgermedium gespiesen bzw. beaufschlagt wird.

14. Verfahren gemäss Anspruch 13, **dadurch gekennzeichnet, dass** der Dampferzeuger (3) und der Überhitzer (9) durch ein im Kreislauf geführtes gasförmiges Wärmeträgermedium miteinander gekoppelt sind.

15. Verfahren gemäss Anspruch 14, **dadurch gekennzeichnet, dass** das im Kreislauf geführte gasförmige Wärmeträgermedium Luft oder Dampf ist.

16. Verfahren gemäss Anspruch 13 bis 15, **dadurch gekennzeichnet, dass** die Brennkammerwände (7) mittels des in den Hohlräumen (18) der Brennkammerwände (7) zirkulierenden gasförmigen Wärmeträgermediums unter den Ascheschmelzpunkt abgekühlt werden.

17. Verfahren gemäss irgendeinem der Ansprüche 13 bis 16, **dadurch gekennzeichnet, dass** mindestens ein Teil des Mediums nach dem Dampferzeuger (3) über einen Medium-Bypass (15a) durch den Ofen (2) zur zusätzlichen Erhitzung, gegebenenfalls via einen Vorüberhitzer (9a), geleitet und erst anschliessend in den Überhitzer (9) geführt wird.

18. Verfahren nach irgendeinem der Ansprüchen 13 bis 17, **dadurch gekennzeichnet, dass** in der Startphase ein bei Raumtemperatur gasförmiges Wärmeträgermedium, vorzugsweise Luft, verwendet wird, dass das Wärmeträgermedium erhitzt wird, vorzugsweise auf mindestens 600°C, dass dieses Wärmeträgermedium verwendet wird, um im Überhitzer (9) den aus dem Dampferzeuger (3) stammenden Nassdampf, Sattdampf oder vorüberhitzten Dampf auf über 520°C zu überhitzen, dass das gasförmige Wärmeträgermedium kontinuierlich über eine Einspeise-Leitung (14) durch Dampf ersetzt oder mit Dampf oder einem anderen Wärmeträgermedium vermischt wird, wobei das bei Raumtemperatur gasförmige Trägermedium aus dem Wärmeträgermedium-Kreislauf über eine Ausblasleitung (13) ausgeschleust wird.

19. Verfahren nach irgendeinem der Ansprüchen 13 bis 18, **dadurch gekennzeichnet, dass** in der Endphase der als Wärmeträgermedium verwendeter Wasserdampf kontinuierlich über eine Einspeise-Leitung (14) durch ein bei Raumtemperatur gasförmiges Wärmeträgermedium ersetzt wird, wobei der Dampf aus dem Wärmeträgermedium-Kreislauf über eine Ausblasleitung (13) ausgeschleust wird.

## Claims

1. An installation for generating superheated medium, in particular steam, by means of a heat transfer medium with a supply means (1) for supplying combustion fuels to a furnace (2) and a steam generator (3) connected downstream of the furnace for transferring heat from the hot waste gases formed during combustion to a medium to be superheated which is flowing through the steam generator (3), the steam generator (3) being connected with a superheater (9) via a medium line (15) in such a way that the hot to mildly superheated medium is transferred from the steam generator (3) into the superheater (9), the superheater (9) being connected to the furnace (2) via a heat transfer medium line (12) in such a way that a gaseous heat transfer medium produced in the furnace (2) by means of heat exchange is passed through this line (12) to the superheater (9) and serves therein as a heat source for superheating the medium in the superheater (9), and the superheater (9) being connected with a high pressure steam turbine (8) via a line (16) in such a way that superheated medium leaving the superheater (9) is passed as a drive force to the high pressure steam turbine (8),
the installation being suitable for the combustion of special fuels as combustion fuels, **characterised in that**
the furnace (2) comprises a combustion chamber, which is constructed substantially from refractory ceramic parts, and **in that** channel-shaped cavities (18) are set into the combustion chamber walls (7) formed of refractory material for conveying/passage of the gaseous heat transfer medium.

2. An installation according to claim 1, **characterised in that** the furnace (2) comprises a combustion chamber, which is configured as a main combustion chamber (19), a post-combustion chamber (20) and flues (28), and the walls (7) of which are provided with channel-shaped cavities (18), which are arranged parallel to the wall surface and open at one end face into a heat transfer medium distributor channel (25) for the heat transfer medium inflow line and at the other end face into a heat transfer medium distributor channel (25) for the heat transfer medium outflow line.

3. An installation according to claim 1 or claim 2, **characterised in that** the cavities (18) are configured as bores or channels, preferably of constant, regular, in particular round cross-section.

4. An installation according to any one of the preceding claims, **characterised in that** the furnace (2) is also equipped with combustion chamber partitions and **in that** the refractory material of the combustion chamber walls (7b, 7c) and combustion chamber partitions (7a) consists of slag-repellent ceramic material.

5. An installation according to any one of the preceding claims, **characterised in that** it comprises a first control device (17a) and/or a second control device (17b), which second control device (17b) controls the feed rate of the heat transfer medium as a function of medium production of the highly superheated medium.

6. An installation according to any one of the preceding claims, **characterised in that**, downstream of the steam generator (3), at least a proportion of the medium is passed via a medium bypass (15a) through the furnace (2) for additional heating, optionally via a pre-superheater (9a), and only then into the superheater (9), at least some of the walls (7) of the furnace (2) comprising cavities with steam pipes (33) arranged therein, in such a way that heat transfer medium can flow around the steam pipes.

7. A furnace (2), suitable for use in an installation according to any one of the preceding claims, the combustion chamber of the furnace (2) being constructed substantially of refractory ceramic parts, and channel-shaped cavities (18) being set into the combustion chamber walls (7) formed of refractory material, in particular cavities (18) arranged parallel to the wall surface, the walls (7) being constructed from wall elements, the wall elements comprising channel-shaped cavities (18) for conveying/passage of a gaseous heat transfer medium and supply channels (35) for heat transfer medium extending in the same direction.

8. A furnace (2) according to claim 7, **characterised in that** partitions (7a) are provided in the combustion chamber, which partitions are provided with channel-shaped cavities (18) for the passage of heat transfer medium and through which the flue gases are diverted at least partially in meandering manner, in such a way that their residence time in the furnace (2) is increased, and heat transfer to the heat transfer medium is improved.

9. A furnace (2) according to claim 7 or claim 8, **characterised in that** the channel-shaped cavities (18) are cast channels or bores of constant, regular, in particular round, cross-section.

10. A furnace (2) according to any one of claims 7 to 9, **characterised in that** the ceramic parts take the form of plates and the plates forming side walls of the combustion chamber comprise end faces which are bevelled in an outer region, such that the orifices of the channel-shaped cavities (18) open into a two- or three-part distributor channel (25) formed by two or three ceramic plates and a distributor element (24), which distributor channel is connected at at least one point with a heat transfer medium inflow line (26) or a heat transfer medium outflow line (27).

11. A furnace (2) according to any one of claims 7 to 10, **characterised in that** at least a proportion of the walls (7) comprise cavities with steam pipes (33) arranged therein.

12. A furnace (2) according to any one of claims 7 to 11, **characterised in that** the refractory ceramic parts are parts of slag-repellent ceramics.

13. A method for producing superheated medium, in particular steam, in installations according to any one of claims 1 to 6, in particular using refuse/waste or biomass as combustion fuel, the medium taken from the steam generator (3) of a first stage (main installation), in particular saturated steam, wet steam or mildly superheated steam, being transferred into the superheater (9) of a second stage (secondary installation) and there superheated by means of the superheater (9) and then supplied to a high pressure steam turbine (8) for power generation, **characterised in that** the superheater is fed or charged by the gaseous heat transfer medium heated in the cavities (18) of the furnace (2).

14. A method according to claim 13, **characterised in that** the steam generator (3) and the superheater (9) are coupled together by a recirculated gaseous heat transfer medium.

15. A method according to claim 14, **characterised in that** the recirculated gaseous heat transfer medium is air or steam.

16. A method according to claims 13 to 15, **characterised in that** the combustion chamber walls (7) are cooled to below ash fusion temperature by means of the gaseous heat transfer medium circulating in the cavities (18) of the combustion chamber walls (7).

17. A method according to any one of claims 13 to 16, **characterised in that**, downstream of the steam generator (3), at least a proportion of the medium is passed via a medium bypass (15a) through the furnace (2) for additional heating, optionally via a pre-superheater (9a), and only then conveyed into the superheater (9).

18. A method according to any one of claims 13 to 17, **characterised in that**, in the start phase, a heat transfer medium which is gaseous at room temperature, preferably air, is used, **in that** the heat transfer medium is heated, preferably to at least 600°C, **in that** this heat transfer medium is used to superheat wet steam, saturated steam or pre-superheated steam coming from the steam generator (3) to over 520°C in the superheater (9), **in that** the gaseous heat transfer medium is replaced continuously by steam via a feed line (14) or mixed with steam or another heat transfer medium, the transfer medium which is gaseous at room temperature being discharged from the heat transfer medium circuit via an escape line (13).

19. A method according to any one of claims 13 to 18, **characterised in that**, in the end phase, the steam used as a heat transfer medium is replaced continuously via a feed line (14) by a heat transfer medium which is gaseous at room temperature, the steam being discharged from the heat transfer medium circuit via an escape line (13).

## Revendications

1. Installation pour la génération d'un fluide surchauffé, en particulier de la vapeur, au moyen d'un fluide caloporteur, avec un dispositif d'alimentation (1) pour le transport de combustibles vers un four (2) et un générateur de vapeur (3) en aval du four pour la transmission de chaleur des gaz d'échappement chauds formés par la combustion vers un fluide traversant le générateur de vapeur (3) à surchauffer, où le générateur de vapeur (3) est relié à un surchauffeur (9) par une conduite de fluide (15), de manière à conduire le fluide chaud à légèrement surchauffé du générateur de vapeur (3) au surchauffeur (9), où le surchauffeur (9) est relié au four (2) par une conduite de fluide caloporteur (12), de telle manière qu'un fluide caloporteur gazeux généré par échange de chaleur dans le four (2) soit conduit via ladite conduite (12) vers le surchauffeur (9) où elle servira de source de chaleur pour le surchauffage du fluide dans le surchauffeur (9), et où le surchauffeur (9) est relié par une conduite (16) à une turbine à vapeur à haute pression (8), de manière à conduire le fluide surchauffé sortant du surchauffeur (9) en tant que force d'entraînement vers la turbine à vapeur à haute pression (8),
ladite installation étant prévue pour la combustion de combustibles spéciaux en tant que combustibles, **caractérisée en ce que**
le four (2) comprend une chambre de combustion, laquelle est maçonnée essentiellement en pièces céramiques réfractaires, et **en ce que** des cavités en forme de canaux (18) pour la traversée/la conduction d'un fluide caloporteur gazeux sont ménagées dans les parois (7) en matériau réfractaire de la chambre de combustion.

2. Installation selon la revendication 1, **caractérisée en ce que** le four (2) comprend une chambre de combustion réalisée comme chambre de combustion principale (19), chambre de post-combustion (20) et comme carneaux (28), et dont les parois (7) sont pourvues de cavités (18) en forme de canaux disposées parallèlement à la surface de paroi et débouchant sur un premier côté frontal dans un canal distributeur (25) de fluide caloporteur pour la conduite d'amenée de fluide caloporteur, et sur l'autre côté frontal dans un canal distributeur (25) de fluide caloporteur pour la conduite d'évacuation de fluide caloporteur.

3. Installation selon la revendication 1 ou 2, **caractérisée en ce que** les cavités (18) sont réalisées comme des alésages ou des canaux, préférentiellement avec une section transversale régulière constante, en particulier circulaire.

4. Installation selon l'une quelconque des revendications précédentes, **caractérisée en ce que** le four (2) est également pourvu de parois intercalaires de chambre de combustion, et **en ce que** le matériau réfractaire des parois (7b, 7c) de chambre de combustion et des parois intercalaires (7a) de chambre de combustion est un matériau céramique résistant au laitier.

5. Installation selon l'une quelconque des revendications précédentes, **caractérisée en ce que** celle-ci comprend un premier dispositif de régulation (17a) et/ou un deuxième dispositif de régulation (17b), ledit deuxième dispositif de régulation (17b) régulant le débit d'amenée du fluide caloporteur en fonction de la production de fluide fortement surchauffé.

6. Installation selon l'une quelconque des revendications précédentes, **caractérisée en ce qu'**au moins une partie du fluide est après le générateur de vapeur (3) conduite vers le chauffage additionnel au travers du four (2) via une dérivation de fluide (15a), le cas échéant via un pré-surchauffeur (9a), et n'est conduite qu'ensuite vers le surchauffeur (9), au moins une partie des parois (7) du four (2) étant pourvue de cavités avec des tuyaux à vapeur (33) disposés dans celles-ci, de manière à permettre le balayage des tuyaux à vapeur par le fluide caloporteur.

7. Four (2), prévu pour une utilisation dans une installation selon l'une quelconque des revendications précédentes, où la chambre de combustion dudit four (2) est maçonnée essentiellement en pièces céramiques réfractaires, et où des cavités (18) en forme de canaux sont ménagées dans les parois (7) en matériau réfractaire de la chambre de combustion, en particulier des cavités (18) disposées parallèlement à la surface de paroi, où les parois (7) sont maçonnées en éléments de paroi, lesdits éléments de paroi étant pourvus de cavités (18) en forme de canaux pour la traversée/la conduction d'un fluide caloporteur gazeux, et de canaux d'alimentation (35) s'étendant dans la même direction pour le fluide caloporteur.

8. Four (2) selon la revendication 7, **caractérisé en ce que** des parois intercalaires (7a) sont prévues dans la chambre de combustion, lesquelles sont pourvues de cavités (18) en forme de canaux pour la conduction de fluide caloporteur, et au travers desquelles les gaz de combustion sont dérivés au moins en partie sous forme de méandres, de manière à élever leur temps de séjour dans le four (2), et à améliorer le transfert de chaleur au fluide caloporteur.

9. Four (2) selon la revendication 7 ou 8, **caractérisé en ce que** les cavités (18) en forme de canaux sont des canaux coulés ou des alésages avec une section transversale régulière constante, en particulier circulaire.

10. Four (2) selon l'une quelconque des revendications 7 à 9, **caractérisé en ce que** les pièces céramiques sont réalisées sous forme de plaques, et **en ce que** les faces frontales des plaques formant les parois latérales de la chambre de combustion sont chanfreinées dans une zone située à l'extérieur, si bien que les ouvertures des cavités (18) en forme de canaux s'ouvrent dans un canal distributeur (25) en deux ou trois parties formé par deux ou trois plaques céramiques et un élément distributeur (24), lequel est relié à au moins un emplacement à une conduite d'amenée (26) de fluide caloporteur ou à une conduite d'évacuation (27) de fluide caloporteur.

11. Four (2) selon l'une quelconque des revendications 7 à 10, **caractérisé en ce qu'**au moins une partie des parois (7) est pourvue de cavités avec des tuyaux à vapeur (33) disposés dans celles-ci.

12. Four (2) selon l'une quelconque des revendications 7 à 11, **caractérisé en ce que** les pièces céramiques réfractaires sont des pièces en céramique résistante au laitier.

13. Procédé de génération d'un fluide surchauffé, en particulier de la vapeur, dans des installations selon l'une quelconque des revendications 1 à 6, en particulier en recourant à des ordures ménagères/déchets ou à la biomasse en tant que combustible, où le fluide prélevé du générateur de vapeur (3) d'un premier étage (installation principale), en particulier de la vapeur saturée, de la vapeur humide ou de la vapeur légèrement surchauffée est conduit vers le surchauffeur (9) d'un deuxième étage (installation annexe), où il est surchauffé par le surchauffeur (9), avant d'être conduit vers une turbine à vapeur à haute pression (8) pour le génération de courant, **caractérisé en ce que** le surchauffeur est alimenté ou ravitaillé par le fluide caloporteur gazeux chauffé dans les cavités (18) du four (2).

14. Procédé selon la revendication 13, **caractérisé en ce que** le générateur de vapeur (3) et le surchauffeur (9) sont reliés l'un à l'autre par un fluide caloporteur gazeux circulant en circuit.

15. Procédé selon la revendication 14, **caractérisé en ce que** le fluide caloporteur gazeux circulant en circuit est de l'air ou de la vapeur.

16. Procédé selon l'une quelconque des revendications 13 à 15, **caractérisé en ce que** les parois (7) de la chambre de combustion sont refroidies sous le point de fusion des cendres au moyen du fluide caloporteur gazeux circulant dans les cavités (18) des parois (7) de la chambre de combustion.

17. Procédé selon l'une quelconque des revendications 13 à 16, **caractérisé en ce qu'**au moins une partie du fluide est, après le générateur de vapeur (3), conduite vers le chauffage additionnel au travers du four (2) via une dérivation de fluide (15a), le cas échéant via un pré-surchauffeur (9a), et n'est conduite qu'ensuite vers le surchauffeur (9).

18. Procédé selon l'une quelconque des revendications 13 à 17, **caractérisé en ce que**, lors de la phase initiale, il est recouru à un fluide caloporteur gazeux à température ambiante, préférentiellement de l'air, **en ce que** le fluide caloporteur est chauffé, préférentiellement à au moins 600 °C, **en ce que** ledit fluide caloporteur est utilisé pour surchauffer à plus de 520 °C dans le surchauffeur (9) la vapeur humide, la vapeur saturée ou pré-surchauffée provenant du générateur de vapeur (3), **en ce que** le fluide caloporteur gazeux est continuellement remplacé par de la vapeur au moyen d'une conduite d'alimentation (14), ou mélangé à de la vapeur ou à un autre fluide caloporteur, le fluide porteur gazeux à température ambiante étant évacué du circuit de fluide caloporteur par une conduite de purge (13).

19. Procédé selon l'une quelconque des revendications 13 à 18, **caractérisé en ce que** lors de la phase finale, la vapeur d'eau utilisée comme fluide caloporteur est continuellement remplacée par un fluide caloporteur gazeux à température ambiante au moyen d'une conduite d'alimentation (14), la vapeur étant évacuée du circuit de fluide caloporteur par une conduite de purge (13).
